# FASCICULE DE BREVET EUROPEEN

(11) **EP 2 833 094 B1**
(45) Date de publication et mention de la délivrance du brevet: **22.05.2019**
(21) Numéro de dépôt: 14179391.9
(22) Date de dépôt: 31.07.2014
(51) Int. Cl.: G01B 9/02, G01M 11/00, G02B 27/00

(54) **Système de contrôle d'une surface optique à mesurer**
Kontrollsystem einer zu messenden optischen Oberfläche
System for controlling an optical surface to be measured

(30) Priorité: 01.08.2013 FR 1301855
(43) Date de publication de la demande: 04.02.2015
(73) Titulaire: Thales, 92200 Neuilly Sur Seine (FR)
(72) Inventeur: Fourez, Julien, 13593 AIX-EN-PROVENCE CEDEX 3 (FR)
(74) Mandataire: Lavoix

(56) Documents cités:
- CN-A- 102 661 719
- US-A1- 2006 268 282
- US-A1- 2007 201 006
- US-A1- 2008 297 912
- US-A1- 2009 079 992
- US-A1- 2009 251 702
- US-A1- 2010 259 762
- US-B1- 6 490 046

## Description

La présente invention concerne un système de contrôle d'une surface optique à mesurer.

Dans le cadre de l'astronomie, il est souhaitable de contrôler les éléments optiques intervenant dans la combinaison optique complète du télescope. C'est notamment le cas des télescopes terrestres comprenant, entre autres, un miroir primaire et un miroir secondaire. Pour les télescopes les plus grands, le miroir primaire peut être constitué de plusieurs centaines d'unités appelées segments et représentables par des dizaines de formes de surface différentes.

Dans le cadre de la fabrication de ces segments et de leur contrôle final, il convient de les contrôler sur toute leur surface à une précision de l'ordre de 10 nm RMS par rapport à leur surface théorique, complètement définie par ailleurs. Le terme RMS désigne une moyenne quadratique et est un acronyme signifiant « root mean square ».

Les segments d'un miroir primaire sont dits fortement asphériques dans la mesure où leur écart par rapport à la meilleure sphère (typiquement supérieur à 20 µm environ) ne permet pas une mesure interférométrique directe au centre de courbure de cette meilleure sphère. En outre, les dimensions des segments sont relativement grandes puisque le diamètre d'un segment peut être de l'ordre de 1,4 m.

Contrôler de tels segments s'avère long, difficile et onéreux à cause de ces exigences sévères de mesure de précision de surface. Il est donc souhaitable de proposer un dispositif permettant un contrôle interférométrique des surfaces optiques de segments qui soit d'une mise en oeuvre aisée et peu coûteuse.

Ainsi, pour réaliser le contrôle de telles surfaces, il est connu de réaliser un contrôle interférométrique par des hologrammes générés par ordinateur. Un hologramme généré par ordinateur est souvent désigné par l'acronyme anglais CGH pour Computer Generated Holograms.

Toutefois, un tel contrôle implique l'emploi d'un hologramme particulier s'adaptant à la forme de chaque type de segments à mesurer. Ainsi, le même nombre d'hologrammes que le nombre de type de segments à mesurer est à fabriquer et, à chaque changement de type de segments, il convient de modifier l'hologramme utilisé. Cela entraîne un surcoût. De plus, l'hologramme étant spécifique du segment, tout changement dans les spécifications de celui-ci rend l'hologramme inadapté.

En outre, l'impossibilité de calibrer la configuration de mesure et les éléments de mesure une fois que les différents éléments sont en place diminue la précision de la mesure. Un moyen d'atténuer cette difficulté est d'effectuer une mesure interférométrique indépendante de l'hologramme. Cela a un impact direct en terme de coût et de temps.

De plus, du fait que les hologrammes sont des optiques diffractives, la mise en oeuvre de cette mesure implique la génération d'une vibration mécanique du segment ou d'une optique de référence, ce qui est souvent délicat à mettre en oeuvre.

Le document US 6,490,046 décrit un dispositif de mesure d'une forme, d'une rugosité ou d'une distance d'une surface utilisant un interféromètre. Un interféromètre additionnel de Mach-Zehnder est utilisée pour introduire un déphasage ou une dispersion contrôlée dans les faisceaux de mesure et/ou de référence. Les documents US2009/0079992 et US2009/0251702 décrivent la mesure de la surface d'un objet. Deux éléments optiques rotatifs dans le faisceau de mesure sont utilisés pour introduire des fonctions de phase pour contrôler l'astigmatisme.

Il existe donc un besoin pour un système de contrôle d'une surface optique à mesurer par rapport à une surface optique de référence permettant un contrôle précis de plusieurs optiques de type différent tout en conservant une certaine commodité d'utilisation.

A cet effet, l'invention a pour objet un système de contrôle d'une surface optique à mesurer par rapport à une surface optique de référence selon la revendication 1.

Suivant des modes de réalisation particuliers, le système optique comprend une ou plusieurs des caractéristiques suivantes, prise(s) isolément ou suivant toutes les combinaisons techniquement possibles :
- le système de contrôle comprend un dispositif d'interférences entre un premier faisceau lumineux et un deuxième faisceau lumineux, le premier faisceau ayant une phase proportionnelle à l'écart entre la surface optique de référence et une surface plane idéale et le deuxième faisceau ayant une phase égale à la somme d'une phase proportionnelle à l'écart entre la surface optique à mesurer et une surface plane idéale, de la première fonction de phase et de la deuxième fonction de phase.
- le dispositif d'interférences est dans un agencement de type Mach-Zehnder.
- le système de contrôle comprend un système optique de projection propre à projeter un faisceau lumineux sur la surface optique de référence et à projeter un faisceau lumineux provenant de l'unité de modification de la phase sur la surface optique de mesurer.
- le système de contrôle comprend un miroir escamotable positionné entre l'unité de modification de la phase et le système de projection.
- l'aberration optique est dépourvue de symétrie de révolution.
- l'aberration optique est un défaut de Zernike.
- le premier élément optique et le deuxième élément optique sont identiques.
- le premier élément optique et le deuxième élément optique sont choisis chacun dans un groupe constitué par une lame, une lentille piano-concave, une lentille plano-convexe, une lentille cylindrique, un hologramme et un miroir.
- l'unité de modification de la phase comporte au moins un codeur angulaire, chaque codeur angulaire entraînant en rotation un élément optique.

D'autres caractéristiques et avantages de l'invention apparaîtront à la lecture de la description qui suit de modes de réalisation de l'invention, donnés à titre d'exemple uniquement et en référence aux dessins qui sont :
- figure 1, une vue schématique en vue de dessus d'un exemple de contrôle d'une surface optique à mesurer, et
- figure 2, une vue schématique d'une unité de modification de la phase d'un faisceau lumineux comprenant deux éléments optiques rotatifs.

Dans ce qui suit, les termes « en amont » et « en aval » sont définis par rapport à la direction de la lumière.

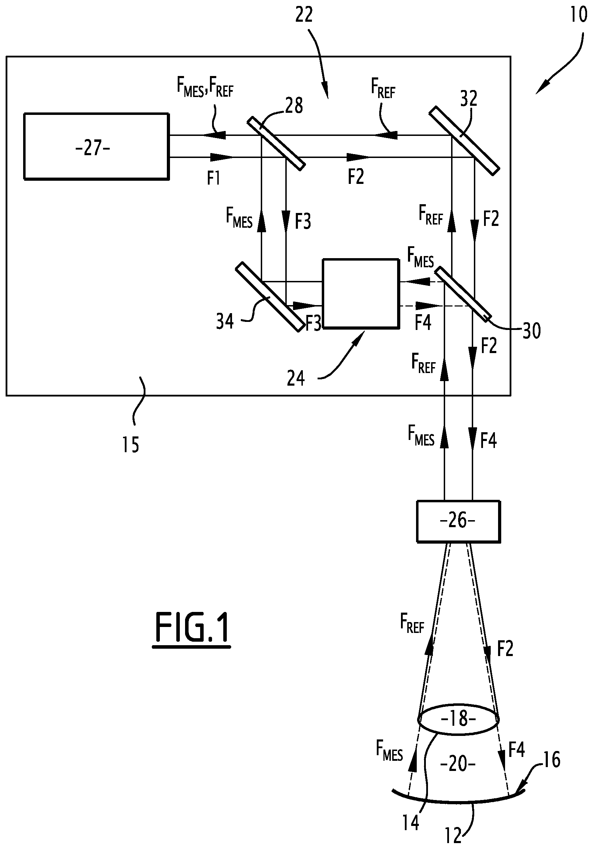

Un système de contrôle 10 d'une surface optique à mesurer 12 par rapport à une surface optique de référence 14 est illustré schématiquement par la figure 1. Le système de contrôle 10 repose sur une table optique 15 présentant une bonne stabilité.

Le système de contrôle 10 d'une surface optique permet d'effectuer un contrôle de la planéité de la surface optique à mesurer 12. Ce contrôle vise à atteindre une précision de l'ordre de 10 nanomètres RMS.

La surface optique à mesurer 12 fait partie d'une optique à mesurer 16. L'optique à mesurer 16 est, par exemple, un segment du miroir primaire d'un télescope.

La surface optique de référence 14 fait partie d'une optique dite de référence 18 dont la surface optique de référence présente une planéité du même ordre de grandeur que la précision de mesure à atteindre (ici, 10 nm RMS)
L'espace entre l'optique de référence 18 et l'optique à mesurer 16 forme une cavité optique 20. La cavité optique 20 représente ce qui est mesuré exactement par le système de contrôle 10. Plus la cavité optique 20 est courte, meilleure est la stabilité et la précision de mesure. Notamment, des imprécisions peuvent intervenir à cause du gradient de température de l'air traversé dans cette cavité 20.

Le système de contrôle 10 comprend un dispositif d'interférences 22, une unité de modification de la phase 24 d'un faisceau lumineux incident, un système optique de projection 26 et une unité 27 servant à la fois à la génération d'un faisceau laser et à mesurer des franges d'interférences. Selon les cas, l'unité 27 est appelée unité de génération d'un faisceau laser ou unité de mesure des franges d'interférences.

Le dispositif d'interférences 22 est propre à réaliser des interférences entre un premier faisceau lumineux ayant une phase proportionnelle à l'écart entre la surface optique de référence 14 et une surface plane idéale et un deuxième faisceau lumineux.

Le dispositif d'interférences 22 est dans un agencement de type Mach-Zehnder. Cela signifie que le dispositif d'interférences 22 comprend deux lames séparatrices 28, 30 et deux miroirs 32, 34 agencés de manière à former un rectangle dont les diagonales sont formées respectivement par les deux lames séparatrices 28, 30 et les deux miroirs 32, 34.

Il est à noter toutefois qu'à la différence de l'interféromètre de Mach-Zehnder, les franges d'interférence sont analysées après que les faisceaux aient été réfléchis à travers le dispositif d'interférences 22 entier et soient revenus à l'unité de génération d'un faisceau laser 27.

Chacune des deux lames séparatrices 28 et 30 est une lame ayant des faces planes et parallèles. Il est toutefois possible, pour éviter de multiples interférences que les faces planes présentent un angle non nul entre elles.

De plus, chacune des deux lames séparatrices 28 et 30 est propre à jouer le rôle d'un séparateur de faisceaux et d'un moyen de recombinaison de faisceaux. Les séparateurs de faisceaux sont souvent désignés sous la terminologie anglaise « beam splitter ». Un séparateur de faisceau est propre à réaliser une division physique d'un faisceau, c'est-à-dire à séparer un faisceau en deux faisceaux. Un élément de recombinaison est propre à recombiner deux faisceaux pour que les deux faisceaux forment un seul faisceau.

En outre, il est avantageux que les lames séparatrices 28 et 30 assurent une fonction d'égalisation de l'intensité lumineuse entre les deux faisceaux séparés puis recombinés. Pour cela, les lames séparatrices 28 et 30 sont propres à fonctionner pour des ondes polarisées selon une polarisation S ou P. Pour générer une telle polarisation, de manière optionnelle, le dispositif d'interférences 22 comprend un polariseur placé en amont de la lame séparatrice 28 considérée.

Dans le cas de la figure 1, les deux miroirs 32 et 34 sont deux miroirs plans.

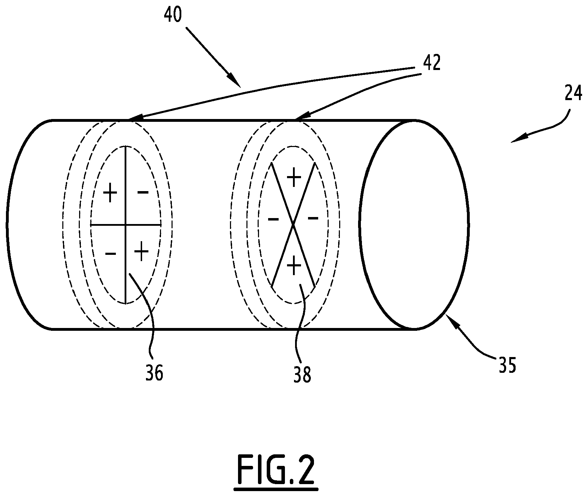

Ainsi que visible à la figure 2, l'unité de modification de la phase 24 se présente sous la forme d'un barillet 35 comprenant un premier élément optique 36, un deuxième élément optique 38 et un moyen 40 pour modifier l'angle entre les deux éléments optiques 36, 38.

Le premier élément optique 36 est muni d'un premier axe optique O1.

L'axe optique est défini pour tout élément optique comme l'axe central du contour d'un élément optique.

Le premier élément optique 36 est propre à introduire en transmission une première fonction de phase dans la phase d'un faisceau incident.

Selon l'exemple de la figure 1, la première fonction de phase correspond à une aberration optique dépourvue de symétrie de révolution.

Une aberration optique est l'écart entre l'image réelle et l'image idéale d'un objet par un système optique parfait. Plus précisément, dans le contexte de l'invention, l'aberration optique est caractérisée par l'écart entre une surface d'onde idéale et une surface d'onde présentant l'aberration. La première fonction de phase est égale à cet écart.

Lorsque l'image réelle ne présente pas de symétrie de révolution, l'aberration optique considérée est dépourvue de symétrie de révolution. C'est notamment le cas des aberrations d'astigmatisme et de coma.

Préférentiellement, l'aberration optique est un défaut de Zernike. Il est entendu par l'expression « défaut de Zernike » un défaut présentant une décomposition selon un seul monôme sur la base des polynômes de Zernike. A titre d'exemple, le défaut de Zernike considéré est de l'astigmatisme, de la coma, du trefoil ou du quadrifoil. A titre d'exemple, la première fonction de phase correspond à de l'astigmatisme.

Dans l'exemple de la figure 1, le premier élément optique 36 est une lame à faces parallèles, dont une face comporte un défaut d'astigmatisme. Ce défaut d'astigmatisme peut être créé par polissage traditionnel ou à commande numérique. Il peut aussi être créé par micro-lithographie dans le cadre d'un CGH. Sur la figure 2, le défaut est indiqué par une croix délimitant quatre zones, deux zones étant marquées d'un « + » pour indiquer les bosses et les deux autres zones étant marquées d'un «-» pour indiquer les creux. Les zones marquées d'un « + » se font face en diagonale.

En variante, les deux faces comportent le défaut de Zernike.

Le premier élément optique 36 est réalisé en un matériau utilisé dans le domaine du polissage comme la silice ou le BK7. En variante, le premier élément optique 36 est fabriqué en sulfure de zinc pour générer une aberration de plus grande amplitude.

En variante, le premier élément optique 36 est une lentille piano-concave ou piano-convexe. La face non plane est usuellement la face qui porte le défaut de Zernike. En outre, la présence d'une lentille dans l'unité de modification de la phase 24 implique de prendre en compte la convergence ou la divergence de la lentille dans la conception optique du système optique de projection 26.

Selon une variante, au lieu d'une lentille piano-concave ou piano-convexe, une lentille cylindrique est considérée.

Selon encore une autre variante, le premier élément optique 36 est un hologramme. De préférence, l'hologramme est généré par ordinateur.

Le deuxième élément optique 38 est muni d'un deuxième axe optique O2. Il est également avantageux, comme dans le cas de la figure 2, que le premier axe optique O1 et le deuxième axe optique O2 soient confondus.

Le deuxième élément optique 38 est propre à introduire en transmission une deuxième fonction de phase dans la phase d'un faisceau incident. Selon l'exemple de la figure 2, la deuxième fonction de phase correspond à la même aberration optique dépourvue de symétrie de révolution introduite par le premier élément optique 36, à savoir un défaut d'astigmatisme.

Dans l'exemple de la figure 2, le deuxième élément optique 38 est également une lame à faces parallèles, dont une face comporte le défaut d'astigmatisme.

Les autres variantes indiquées pour le premier élément optique 36 s'appliquent également pour le deuxième élément optique 38. De préférence, le premier élément optique 36 et le deuxième élément optique 38 sont identiques.

Au moins l'un parmi le premier élément optique 36 et le deuxième élément optique 38 est rotatif autour de l'axe optique O1, O2 propre à l'élément optique considéré 36, 38. Selon l'exemple de la figure 2, à la fois le premier élément optique 36 et le deuxième élément optique 38 sont rotatifs.

Dans le cas de la figure 1, le moyen 40 pour modifier l'angle entre les deux éléments optiques 36, 38 comprend deux codeurs angulaires 42. Chaque codeur angulaire 42 est préférentiellement à axe creux. En variante, le codeur angulaire est une roue entraînant l'élément optique par contact sur le bord de l'élément optique.

De préférence, pour obtenir un contrôle précis du décalage angulaire entre les éléments optiques, le moyen 40 pour modifier l'angle entre les deux éléments optiques 36, 38 est un codeur optique.

Le système optique de projection 26 est un système optique comprenant plusieurs lentilles dans un barillet présentant des entretoises réglables entre les lentilles. Les lentilles sont à symétrie de révolution avec des surfaces optiques sphériques ou asphériques. A titre d'exemple, les lentilles sont réalisées dans en un matériau utilisé dans le domaine du polissage comme la silice ou le BK7.

En variante, le système optique de projection 26 comporte un ensemble de miroirs ou un ensemble de lentilles et de miroirs.

Le système optique de projection 26 est propre à réaliser l'adaptation de la surface d'ondes associée à l'onde comprenant l'aberration optique introduite par l'unité de modification 24 à la surface optique à mesurer 12 de l'optique à mesurer 16.

Le système optique de projection 26 est propre à réaliser l'adaptation de la surface d'ondes associée à un faisceau généré par l'unité de génération 27 à la surface optique de référence 14.

Ainsi, le système optique de projection 26 permet de projeter fidèlement l'aberration optique créée en amont sur l'optique à mesurer 16, ce qui revient à minimiser la distorsion dans le plan de l'optique à mesurer 16. En outre, le système optique de projection 26 permet d'adapter la convergence ou la divergence du faisceau de manière à correspondre aux besoins de la mesure interférométrique. Cela revient à rendre l'ouverture en aval du système optique de projection 26 adapté à l'ouverture numérique de l'optique à mesurer 16.

Ceci a pour conséquence que la conception optique du système optique de projection 26, c'est-à-dire le choix des optiques et de leurs positionnements, est d'autant plus complexe que l'amplitude de l'aberration optique introduite par l'unité de modification 24 est forte, que l'optique à mesurer 16 présente une forte ouverture numérique et que le ratio entre la taille de l'optique à mesurer 16 et la taille des deux éléments optiques 36, 38 est élevé.

L'unité de génération 27 est propre à générer un faisceau laser présentant préférentiellement une divergence inférieure à 10 milliradians (mrad).

L'unité de génération d'un faisceau laser 27 est le plus souvent un laser à gaz de type Hélium-Néon émettant à 632,8 nm. Cette unité 27 peut aussi être une diode laser.

Le fonctionnement du système de contrôle 10 de la figure 1 est maintenant décrit en référence à deux actions distinctes : la calibration des deux éléments optiques 36, 38 et l'utilisation du système de contrôle 10 pour effectuer une mesure de type interférométrique.

Les éléments optiques 36, 38 sont calibrés en rendant l'amplitude d'aberration introduite nulle pour calibrer les deux éléments optiques 36, 38.

Pour cela, les deux éléments optiques 36 et 38 sont mis en opposition de phase, de manière à ne pas modifier la phase en sortie de ces deux éléments optiques 36 et 38. Il est ensuite possible d'effectuer la calibration en utilisant, par exemple, un miroir plan escamotable positionné entre l'unité de modification de la phase 24 et le système optique de projection 26. La calibration est ensuite complétée par une mesure de l'aberration introduite en effectuant un petit écart de position angulaire qui permet à l'aberration introduite de rester mesurable lorsque comparée à une onde idéale.

L'utilisation du système de contrôle 10 pour effectuer une mesure de type interférométrique est maintenant décrite.

L'unité de génération 27 d'un faisceau laser émet un premier faisceau lumineux F1. Ce premier faisceau lumineux F1 est un faisceau laser collimaté.

Le premier faisceau F1 se propage jusqu'à la première lame séparatrice 28. Au niveau de cette première lame séparatrice 28, le premier faisceau F1 est divisé en deux faisceaux, un deuxième faisceau F2 et un troisième faisceau F3.

Le deuxième faisceau F2 est conduit jusqu'au système optique de projection 26 via le premier miroir 32 et la deuxième lame séparatrice 30.

Le troisième faisceau F3 se propage jusqu'à l'unité de modification de la phase 24 en étant réfléchi par le deuxième miroir 34. Dans l'unité de modification de la phase 24, le troisième faisceau F3 passe successivement par les faces suivantes : face plane du premier élément optique 36, face déformée du premier élément optique 36 comprenant une aberration d'astigmatisme, face déformée du deuxième élément optique 38 comprenant une aberration d'astigmatisme et face plane du deuxième élément optique 38. Cela permet d'introduire une fonction de phase dans la phase du troisième faisceau F3 correspondant à une aberration optique dépourvue de symétrie de révolution, en l'occurrence ici une aberration d'astigmatisme. L'aberration optique introduite est l'aberration majoritaire théorique de l'optique à mesurer 16. En l'occurrence pour un miroir hors d'axe, cette aberration majoritaire est souvent de l'astigmatisme.

Un quatrième faisceau F4 est ainsi obtenu en sortie de l'unité de modification de la phase 24. Le quatrième faisceau F4 est réfléchi par la deuxième lame séparatrice 30 et se propage jusqu'au système optique de projection 26.

Le deuxième faisceau F2 et le quatrième faisceau F4 sont projetés respectivement sur la surface de référence 14 et la surface à mesurer 12 de l'optique à mesurer 16.

Le faisceau réfléchi par la surface de référence 14 comporte une phase proportionnelle à l'écart entre la surface optique à mesurer et une surface plane idéale. Le faisceau réfléchi est donc un faisceau de référence noté F_{REF}.

Le faisceau réfléchi par la surface à mesurer 12 comporte une phase proportionnelle à l'écart entre la surface optique à mesure et une surface plane idéale à laquelle l'aberration optique dépourvue de symétrie de révolution introduit par l'unité de modification de la phase 24 a été ajoutée. Le faisceau réfléchi est donc un faisceau de mesure noté F_{MES}.

Le faisceau de référence F_{REF} suit ensuite le trajet suivant : transmission par la deuxième lame séparatrice 30, réflexion par le premier miroir 32 et transmission par la première lame séparatrice 28. Le faisceau de mesure F_{MES} suit ensuite le trajet suivant : réflexion par la deuxième lame séparatrice 30, réflexion par le deuxième miroir 34 et réflexion par la première lame séparatrice 28. Il est d'ailleurs à noter que ce cheminement est plus efficace si la deuxième lame séparatrice 30 est traitée, comme la première lame séparatrice 28 de manière à réfléchir une certaine polarisation (polarisation S) et transmettre l'autre (polarisation P).

Après la première lame séparatrice 28, des interférences entre les faisceaux de référence F_{REF} et de mesure F_{MES} sont observables, ce qui permet de remonter à l'écart de front d'onde entre les deux faisceaux en faisant varier soit la longueur d'onde du faisceau incident soit une position mécanique d'un élément optique tel que l'optique 12 à mesurer.

En cas d'écart entre l'aberration optique dépourvue de symétrie de révolution qu'elle est censée présenter et l'aberration optique que présente réellement la surface à mesurer 16, l'écart angulaire entre les deux éléments optiques 36, 38 est modifiée pour mieux compenser l'aberration optique dépourvue de symétrie de révolution que présente la surface à mesurer 16.

Ainsi, appliquée à un segment de miroir hors d'axe, la méthode proposée, permet de compenser l'astigmatisme de celui-ci. L'aberration d'astigmatisme d'un tel miroir peut être de l'ordre de 200 microns ce qui empêche de réaliser un contrôle interférométrique sur la qualité de la surface d'un tel miroir. La compensation de l'aberration d'astigmatisme permet d'accéder à d'autres aberrations d'amplitude plus réduite, comme celle de coma, pour lesquelles un contrôle interférométrique est possible. Le système proposé permet ainsi de réaliser le contrôle de la surface à mesurer 12 d'une optique à mesurer 16. Dans le cas, toutefois où les autres aberrations d'amplitude plus réduites restent importantes, il est aussi possible d'ajouter une unité de modification 24 supplémentaire dont le but serait de compenser cette autre aberration, par exemple la coma.

Cela permet, en outre, de remplacer un ensemble d'optiques de test, comme des hologrammes, par une seule combinaison d'optiques. Plus précisément, au lieu de disposer d'un hologramme par type de segment, le système de contrôle 10 permet d'associer une position des deux éléments optiques 36, 38 à chaque type de segment. Autrement dit, la même paire d'éléments optiques 36, 38 compense l'aberration géométrique principale de l'optique à mesurer 16 pour une gamme de différentes valeurs de cette aberration géométrique, ce qui résout l'adaptabilité de ce système de contrôle 10 à différentes valeurs d'aberration géométrique.

Cela rend le système de contrôle 10 adaptable à la surface optique à mesurer 12 en fonction de la position angulaire respective des deux éléments optiques 36, 38. Au lieu de plusieurs dizaines d'hologrammes à fabriquer et à contrôler pour contrôler les segments dans l'état de la technique, les quelques optiques du système de contrôle 10 suffisent assurer pour la même fonction. Cela entraîne une baisse de coût associé à la réalisation de contrôle d'un ensemble de surfaces optiques à mesurer 12.

Le système de contrôle 10 permet aussi d'augmenter la précision et la fiabilité de la mesure. En effet, le système de contrôle 10 est peu sensible aux vibrations. En outre, il est possible de calibrer les éléments utilisés même une fois positionnés, par exemple à l'aide d'un miroir plan en amont du système de projection. La calibration autour de la valeur nulle de l'unité de modification de la phase 24 permet une calibration de bonne qualité de l'aberration introduite en fonction de l'angle entre les deux éléments optiques 36, 38.

L'amélioration de la qualité provient aussi du fait que la dépendance de paramètres extérieurs pour les mesures est rendue aussi faible que possible. A titre d'exemple, la cavité 20 considérée est courte (la surface de référence et la surface à mesurer sont proches) pour diminuer les effets de température et la cavité optique 20 peut ne pas être déplacée mécaniquement. En effet, il est possible de ne pas utiliser d'éléments diffractifs sur la configuration de contrôle attendue, contrairement à l'état de la technique. Un déplacement optique suffit.

De plus, le système de contrôle 10 est peu sensible à des désalignements ou décentrements éventuels des éléments optiques 36, 38, d'après des simulations effectuées par la demanderesse.

Le système de contrôle 10 proposé permet, de plus, d'obtenir une très faible distorsion et de ne pas obturer les faisceaux de référence F_{REF} et de mesure F_{MES}.

Le système de contrôle 10 proposé sied en particulier pour des surfaces hors d'axes et présentant ainsi une surface théorique décrite par des termes tels que de l'astigmatisme et de la coma. Toutefois, le système de contrôle 10 s'adapte pour toute autre surface théorique, et notamment celles qui sont souvent rencontrées dans le domaine de l'astronomie et du spatial.

En variante, les deux éléments optiques fonctionnent non pas en transmission comme dans le cas de la figure 1 mais en réflexion. A titre d'exemple, les deux éléments optiques 36, 38 sont alors des miroirs hors d'axe.

Les différents modes de réalisation du système de contrôle 10 sont notamment utilisables dans le domaine de l'astronomie. Notamment, ce système de contrôle 10 est particulièrement intéressant pour une gamme d'éléments optiques présentant une aberration optique variable comme par exemple des miroirs de forme paraboloïdale se situant hors axe. Ce système de contrôle 10 s'applique par extension à tous domaines dans lequel les optiques polies précisément sont utilisées comme le spatial (observation de la terre et astronomie notamment), la défense ou l'environnement.

En outre, dans tous les cas, le système de contrôle 10 de la surface optique à mesurer 12 par rapport à la surface optique de référence 14 permet un contrôle précis de plusieurs optiques de type différent tout en conservant une certaine commodité d'utilisation.

## Revendications

1. Système de contrôle (10) d'une surface optique à mesurer (12) par rapport à une surface optique de référence (14), le système de contrôle (10) étant **caractérisé en ce que** le système de contrôle (10) comporte un dispositif d'interférences (22) étant dans un agencement de Mach-Zehnder avec deux lames séparatrices (28, 30) et comprenant une unité de modification de la phase (24) d'un faisceau lumineux incident, l'unité de modification de la phase (24) étant placée entre les deux lames séparatrices (28, 30) et comprenant :
- un premier élément optique (36) muni d'un premier axe optique (O1) et propre à introduire une première fonction de phase dans la phase d'un faisceau incident, et
- un deuxième élément optique (38) muni d'un deuxième axe optique (O2) et propre à introduire une deuxième fonction de phase dans la phase d'un faisceau transmis ou réfléchi par le premier élément optique (36),
la première fonction de phase et la deuxième fonction de phase correspondant chacune à la même aberration optique et au moins l'un parmi le premier élément optique (36) et le deuxième élément optique (38) étant rotatif autour de l'axe optique (O1, O2) propre à l'élément optique (36, 38) considéré,
le dispositif d'interférences (22) comportant une unité (27) servant à la fois à la génération d'un faisceau laser et à mesurer des franges d'interférences, les franges d'interférences étant analysées après réflexion par la surface optique à mesurer (12) et par la surface optique de référence (14) à travers le dispositif d'interférences (22) entier et retour à l'unité (27) servant à la fois à la génération d'un faisceau laser et à mesurer des franges d'interférences.

2. Système de contrôle selon la revendication 1, dans lequel le dispositif d'interférences (22) est un dispositif d'interférences (22) entre un premier faisceau lumineux et un deuxième faisceau lumineux, le premier faisceau ayant une phase proportionnelle à l'écart entre la surface optique de référence et une surface plane idéale et le deuxième faisceau ayant une phase égale à la somme d'une phase proportionnelle à l'écart entre la surface optique à mesurer et une surface plane idéale, de la première fonction de phase et de la deuxième fonction de phase.

3. Système de contrôle selon la revendication 1 ou 2, comportant, en outre, un système optique de projection (26) propre à projeter un faisceau lumineux sur la surface optique de référence et à projeter un faisceau lumineux provenant de l'unité de modification de la phase (24) sur la surface optique à mesurer.

4. Système de contrôle selon la revendication 3, comportant, en outre, un miroir escamotable positionné entre l'unité de modification de la phase (24) et le système de projection (26).

5. Système de contrôle selon l'une quelconque des revendications 1 à 4, dans lequel l'aberration optique est dépourvue de symétrie de révolution.

6. Système de contrôle selon l'une quelconque des revendications 1 à 5, dans lequel l'aberration optique est un défaut de Zernike.

7. Système de contrôle selon l'une quelconque des revendications 1 à 6, dans lequel le premier élément optique (36) et le deuxième élément optique (38) sont identiques.

8. Système de contrôle selon l'une quelconque des revendications 1 à 7, dans lequel le premier élément optique (36) et le deuxième élément optique (38) sont choisis chacun dans un groupe constitué par une lame, une lentille piano-concave, une lentille piano-convexe, une lentille cylindrique, un hologramme et un miroir.

9. Système de contrôle selon l'une quelconque des revendications 1 à 8, dans lequel l'unité de modification de la phase (24) comporte au moins un codeur angulaire, chaque codeur angulaire entraînant en rotation un élément optique (36, 38).

## Patentansprüche

1. System zur Steuerung (10) einer optischen Fläche zum Messen (12) bezüglich einer optischen Referenzfläche (14), wobei das System zur Steuerung (10) **dadurch gekennzeichnet ist, dass** das System zur Steuerung (10) aufweist eine Interferenzen-Vorrichtung (22), die in einer Mach-Zehnder-Anordnung mit zwei Strahlteilern (28, 30) vorliegt und die aufweist eine Einheit zur Modifikation der Phase (24) eines einfallenden Lichtstrahls, wobei die Phasen-Modifikations-Einheit (24) zwischen den beiden Strahlteilern (28, 30) angeordnet ist und aufweist:
- ein erstes optisches Element (36), das eine erste optische Achse (01) hat und imstande ist, eine erste Phasenfunktion in die Phase eines einfallenden Strahls einzubringen, und
- ein zweites optisches Element (38), das eine zweite optische Achse (02) hat und imstande ist, eine zweite Phasenfunktion in die Phase eines Strahls einzubringen, der mittels des ersten optischen Elements (36) transmittiert oder reflektiert wurde,
wobei die erste Phasenfunktion und die zweite Phasenfunktion jeweils zu der gleichen optischen Aberration korrespondieren und wenigstens eine von dem ersten optischen Element (36) und dem zweiten optischen Element (38) um die zu dem betreffenden optischen Element (36, 38) gehörende optische Achse (01, 02) drehbar ist,
wobei die Interferenzen-Vorrichtung (22) eine Einheit (27) aufweist, die sowohl der Erzeugung eines Laserstrahls als auch dem Messen von Interferenz-Mustern dient, wobei die Interferenz-Muster analysiert werden nach der Reflektion mittels der optischen Fläche zum Messen (12) und mittels der optischen Referenzfläche (14) durch die ganze Interferenzen-Vorrichtung (22) hindurch und zurück zur Einheit (27), die sowohl der Erzeugung eines Laserstrahls als auch dem Messen von Interferenzmustern dient.

2. System zur Steuerung gemäß Anspruch 1, wobei die Interferenzen-Vorrichtung (22) eine Interferenzen-Vorrichtung (22) zwischen einem ersten Lichtstrahl und einem zweiten Lichtstrahl ist, wobei der erste Strahl eine Phase hat, die proportional zu dem Abstand zwischen der optischen Referenzfläche und einer idealen Planfläche ist, und der zweite Strahl eine Phase hat, die gleich der Summe einer Phase, die proportional zu dem Abstand zwischen der optischen Fläche zum Messen und einer idealen Planfläche ist, der ersten Phasenfunktion und der zweiten Phasenfunktion ist.

3. System zur Steuerung gemäß Anspruch 1 oder 2, ferner aufweisend ein optisches Projizier-System (26), das imstande ist, einen Lichtstrahl auf die optische Referenzfläche zu projizieren und einen Lichtstrahl, der von der Phasen-Modifikations-Einheit (24) stammt, auf die optische Fläche zum Messen zu projizieren.

4. System zur Steuerung gemäß Anspruch 3, ferner aufweisend einen ausfahrbaren Spiegel, der zwischen der Phasen-Modifikations-Einheit (24) und dem Projizier-System (26) angeordnet ist.

5. System zur Steuerung gemäß irgendeinem der Ansprüche 1 bis 4, wobei die optische Aberration Rotationssymmetrie-frei ist.

6. System zur Steuerung gemäß irgendeinem der Ansprüche 1 bis 5, wobei die optische Aberration ein Zernike-Fehler ist.

7. System zur Steuerung gemäß irgendeinem der Ansprüche 1 bis 6, wobei das erste optischen Element (36) und das zweite optische Element (28) identisch sind.

8. System zur Steuerung gemäß irgendeinem der Ansprüche 1 bis 7, wobei das erste optischen Element (36) und das zweite optische Element (38) jeweils aus einer Gruppe ausgewählt sind, die gebildet ist aus einem Strahlteiler, einer plan-konkaven Linse, einer plan-konvexen Linse, einer zylindrischen Linse, einem Hologramm und einem Spiegel.

9. System zur Steuerung gemäß irgendeinem der Ansprüche 1 bis 8, wobei die Phasen-Modifikations-Einheit (24) aufweist wenigstens einen Winkel-Codierer, wobei jeder Winkel-Codierer ein optisches Element (36, 38) drehantreibt.

## Claims

1. A system (10) for controlling an optical surface to be measured (12) relatively to a reference optical surface (14), the control system (10) being **characterized in that** the control system (10) includes an interferential device (22) being in a Mach-Zehnder layout with two beam splitters (28, 30) and comprising a unit for modifying the phase (24) of an incident light beam, the phase modification unit (24) being placed between both beam splitters (28, 30) and comprising:
- a first optical element (36) provided with a first optical axis (01) and able to introduce a first phase function into the phase of an incident beam, and
- a second optical element (38) provided with a second optical axis (O2) and able to introduce a second phase function into the phase of a beam transmitted or reflected by the first optical element (36),
the first phase function and the second phase function each corresponding to the same optical aberration and at least one from among the first optical element (36) and the second optical element (38) being rotary around the optical axis (O1, O2) specific to the relevant optical element (36, 38),
the interferential device (22) comprising a unit (27) used both for generating a laser beam and measuring interference fringes, the interference fringes being analyzed after reflection of the beams by the optical surface to be measured (12) and the reference optical surface (14) through the entire interferential device (22) and after having returned to the unit (27) used both for generating a laser beam and measuring interference fringes

2. The control system according to claim 1, wherein the interferential device (22) is an interferential device (22) between a first light beam and a second light beam, the first beam having a phase proportional to the deviation between the optical reference surface and an ideal planar surface and the second beam having a phase equal to the sum of a phase proportional to the deviation between the optical surface to be measured and an ideal planar surface, of the first phase function and of the second phase function.

3. The control system according to claim 1 or 2, further including an optical projection system (26) able to project a light beam on the optical reference surface and of projecting a light beam from the phase modification unit (24) onto the optical surface to be measured.

4. The control system according to claim 3, further including a retractable mirror positioned between the phase modification unit (24) and the projection system (26).

5. The control system according to any of claims 1 to 4, wherein the optical aberration is without any revolution symmetry.

6. The control system according to any of claims 1 to 5, wherein the optical aberration is a Zernike flaw.

7. The control system according to any of claims 1 to 6, wherein the first optical element (36) and the second optical element (38) are identical.

8. The control system according to any of claims 1 to 7, wherein the first optical element (36) and the second optical element (38) are each selected from a group formed by a plate, a planar-concave lens, a planar-convex lens, a cylindrical lens, a hologram and a mirror.

9. The control system according to any of claims 1 to 8, wherein the phase modification unit (24) includes at least one angular encoder, each angular encoder driving an optical element (36, 38) into rotation.
